# EUROPEAN PATENT APPLICATION

(11) **EP 4 667 236 A1**
(43) Date of publication of application: **24.12.2025**
(21) Application number: 24183206.2
(22) Date of filing: 19.06.2024
(51) Int. Cl.: B60C 1/00, C08L 9/06

(54) **RUBBER COMPOSITIONS**

(71) Applicant: BRIDGESTONE CORPORATION, Chuo-ku Tokyo 104-8340 (JP)
(72) Inventor: van Elburg, Frances Adriana, 7522 Enschede (NL); Blume, Anke, 7500 AE Enschede (NL); Grunert, Fabian, 7522 Enschede (NL); Aurisicchio, Claudia, 00128 Roma (IT); Di Consiglio, Micol, 00128 Roma (IT); Talma, Auke, 5722 Enschede (NL)
(74) Representative: Dehns

(57) **Abstract**

The invention provides rubber compositions comprising: (a) a rubber component comprising one or more diene elastomers; (b) a reinforcing filler; and (c) a plasticizing component comprising: (i) a first plasticizer which is a hydrocarbon resin, or combination of hydrocarbon resins; and (ii) a second plasticizer which is a di- or tri-ester oil containing a compound of general formula (I): 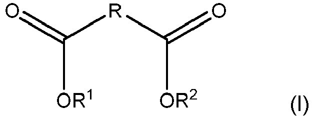 (wherein R is a straight-chained C₂₋₁₀ alkylene group, a branched C₃₋₁₀ alkylene group, or a group having the structure: 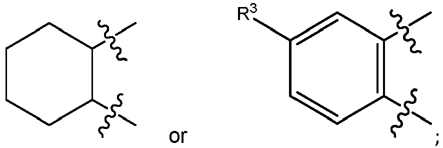 R¹ and R² are independently selected from the group consisting of a straight-chained C₁₋₃₀ alkyl group, a branched C₃₋₃₀ alkyl group, a cyclic C₃₋₃₀ alkyl group, a C₆₋₃₀ aralkyl group, and a C₆₋₃₀ alkaryl group; and R³ is either a hydrogen atom or a group -C(O)OR⁴ in which R⁴ is a straight-chained C₁₋₃₀ alkyl group or a branched C₃₋₃₀ alkyl group). Such rubber compositions can be vulcanised and are suitable for producing vehicle tire components, such as tire treads.

## Description

### Field of the invention

The present invention relates to rubber compositions, to methods for their preparation and to their use in the manufacture of vehicle tire components. It further relates to vehicle tire components made from such rubber compositions, in particular tire treads.

More specifically, the invention relates to rubber compositions having a rubber component comprising one or more diene elastomers which is compounded with a plasticizing component. The plasticizing component comprises a blend of a hydrocarbon resin and a renewable oil. The use of a renewable oil not only improves the sustainability of the rubber composition but also provides an improvement in wet performance, reinforcing behaviour and processing (i.e. cure behaviour) without compromising other dynamic properties of the rubber composition such as rolling resistance and wear resistance.

### Background of the invention

Rubber compositions for use in the production of tire components such as tire treads contain many different components. In addition to the rubber polymer, reinforcing filler and a curing package, these contain one or more plasticizers. Plasticizers are added to improve the processing of the rubber composition, but also influence its final properties. For example, increasing the plasticizer content lowers the glass transition temperature (Tg) and increases the flexibility of the rubber material.

Petroleum-based Treated Distillate Aromatic Extract (TDAE) is conventionally used as a plasticizer in tire tread compounds since it provides good processing and material properties. However, the oil is derived from fossil sources making it non-renewable and non-sustainable. There is a desire to improve the sustainability of tire tread compounds and to replace the plasticizer by renewable alternatives. However, a challenge in replacing TDAE fully with renewable oils is a loss in material properties, in particular a drastic decrease in Tg which leads to a loss in grip performance on wet surfaces.

It is important for tires to have a good grip performance on both dry and wet surfaces, especially on wet road surfaces. A high abrasion or wear resistance is also an important factor for a long service life of the tire and a low rolling resistance is desirable since this can reduce fuel consumption. Together, the wet performance, rolling resistance, and wear resistance are known as the 'magic triangle' of viscoelastic properties in tires. Improving any one of these properties of the rubber composition often has an adverse impact on at least one of the other properties. For example, it is difficult to improve the wet performance of a tire without adversely affecting its rolling resistance and wear resistance. In any tire composition there is a need to ensure that a good balance between these conflicting properties is maintained.

There remains a need to produce alternative rubber compositions using more sustainable plasticizers without compromising rubber properties. In particular there is need to produce such compositions for use in the manufacture of tire components, such as tire treads, which retain desired dynamic properties such as a good balance in wet performance, rolling resistance, and wear resistance.

### Summary of the invention

The inventors now propose that petroleum-based plasticizers, such as TDAE, are replaced by a plasticizing component which comprises a blend of a hydrocarbon resin and a renewable di- or tri-ester oil and have found that this blend can be used without compromising the properties of the rubber composition. Surprisingly, the inventors have found that this blend provides advantages in terms of tensile strength and modulus at 100% and 300% strain, and that the optimum cure time is decreased leading to shorter processing times. This has the potential to save energy during the curing process thus further contributing to the sustainability of the rubber composition.

These findings are of benefit in the production of rubber compositions for use in the tire industry, for example as tire tread compounds. However, they also extend to the production of rubber compositions for use in other applications where there is a need for petroleum-based TDAE oil to be replaced.

In one aspect, the invention provides a rubber composition comprising:
(a) a rubber component comprising one or more diene elastomers;
(b) a reinforcing filler; and
(c) a plasticizing component comprising:
   (i) a first plasticizer which is a hydrocarbon resin, or combination of hydrocarbon resins; and
   (ii) a second plasticizer which is a di- or tri-ester oil containing a compound of general formula (I): 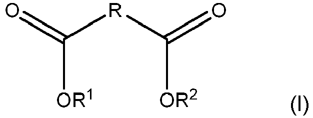
      (wherein R is a straight-chained C₂₋₁₀ alkylene group, a branched C₃₋₁₀ alkylene group, or a group having the structure: 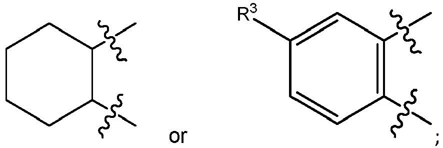
      R¹ and R² are independently selected from the group consisting of a straight-chained C₁₋₃₀ alkyl group, a branched C₃₋₃₀ alkyl group, a cyclic C₃₋₃₀ alkyl group, a C₆₋₃₀ aralkyl group, and a C₆₋₃₀ alkaryl group; and
      R³ is either a hydrogen atom or a group -C(O)OR⁴ in which R⁴ is a straight-chained C₁₋₃₀ alkyl group or a branched C₃₋₃₀ alkyl group).

In another aspect, the invention provides a process for producing a rubber composition, said process comprising the step of compounding components (a), (b) and (c) as defined herein.

In another aspect, the invention provides a vulcanizable rubber composition comprising:
(a) a rubber component comprising one or more diene elastomers;
(b) a reinforcing filler; and
(c) a plasticizing component comprising:
   (i) a first plasticizer which is a hydrocarbon resin, or combination of hydrocarbon resins; and
   (ii) a second plasticizer which is a di- or tri-ester oil containing a compound of general formula (I): 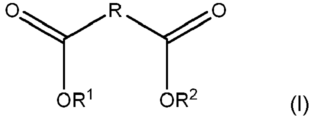
      (wherein R is a straight-chained C₂₋₁₀ alkylene group, a branched C₃₋₁₀ alkylene group, or a group having the structure: 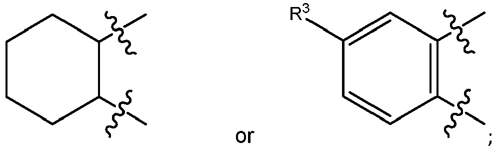
      R¹ and R² are independently selected from the group consisting of a straight-chained C₁₋₃₀ alkyl group, a branched C₃₋₃₀ alkyl group, a cyclic C₃₋₃₀ alkyl group, a C₆₋₃₀ aralkyl group, and a C₆₋₃₀ alkaryl group; and
      R³ is either a hydrogen atom or a group -C(O)OR⁴ in which R⁴ is a straight-chained C₁₋₃₀ alkyl group or a branched C₃₋₃₀ alkyl group).

In another aspect, the invention provides a vulcanized rubber composition obtained by, directly obtained by, or obtainable by cross-linking a vulcanizable rubber composition as herein described.

In another aspect, the invention provides a process for producing a vulcanized rubber composition, said process comprising the steps of compounding components (a), (b) and (c) as herein described whereby to produce a vulcanizable rubber composition; and subjecting said vulcanizable rubber composition to vulcanization by heating to a predetermined temperature and for a predetermined time.

In another aspect, the invention provides the use of a rubber composition as herein described as a component of a vehicle tire or in the manufacture of a component of a vehicle tire.

In another aspect, the invention provides a vehicle tire component made from a rubber composition as herein described.

In another aspect, the invention provides a vehicle tire comprising a vehicle tire component as herein described.

### Detailed Description of the invention

According to one aspect, the invention provides a rubber composition comprising:
(a) a rubber component comprising one or more diene elastomers;
(b) a reinforcing filler; and
(c) a plasticizing component comprising:
   (i) a first plasticizer which is a hydrocarbon resin, or combination of hydrocarbon resins; and
   (ii) a second plasticizer which is a di- or tri-ester oil containing a compound of general formula (I): 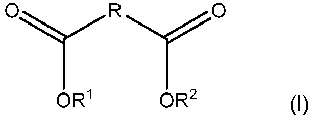
      (wherein R is a straight-chained C₂₋₁₀ alkylene group, a branched C₃₋₁₀ alkylene group, or a group having the structure: 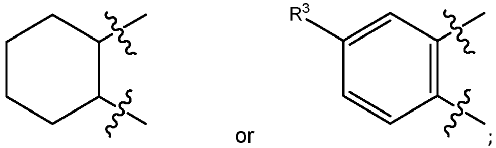
      R¹ and R² are independently selected from the group consisting of a straight-chained C₁₋₃₀ alkyl group, a branched C₃₋₃₀ alkyl group, a cyclic C₃₋₃₀ alkyl group, a C₆₋₃₀ aralkyl group, and a C₆₋₃₀ alkaryl group; and
      R³ is either a hydrogen atom or a group -C(O)OR⁴ in which R⁴ is a straight-chained C₁₋₃₀ alkyl group or a branched C₃₋₃₀ alkyl group).

The invention relates to rubber compositions comprising 100 phr of a rubber component. In line with convention, "phr" is parts per hundred parts (by weight) of the rubber component. It is a term commonly used in the art in which the components of a composition are measured relative to the total of all rubber (i.e. elastomer) components. The total parts of the rubber components are defined as 100 phr and all other components are defined as a ratio against the 100 parts of rubber and expressed in "phr". By "rubber component" is meant a component in the composition which is a rubber. The term "rubber", as used herein, is intended to include natural rubber and synthetic rubbers. The terms "rubber" and "elastomer" are used interchangeably herein, unless otherwise specified.

Unless otherwise specified, the terms "rubber composition", "compounded rubber" and "rubber compound" are used interchangeably herein to refer to rubber which has been blended or mixed (i.e. compounded) with various components or materials and such terms are well known and understood in the art. The invention relates to rubber compositions both in the raw state (i.e. before curing or vulcanization) and in the cured or vulcanized state, i.e. after cross-linking or vulcanization.

The rubber composition according to the invention includes a plasticizing component which comprises: (i) a first plasticizer which is a hydrocarbon resin, or combination of hydrocarbon resins; and (ii) a second plasticizer which is a di- or tri-ester oil containing a compound of general formula (I): 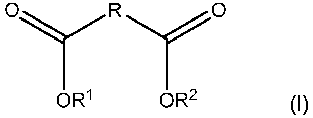
(wherein R is a straight-chained C₂₋₁₀ alkylene group, a branched C₃₋₁₀ alkylene group, or a group having the structure: 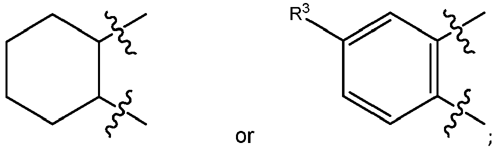
R¹ and R² are independently selected from the group consisting of a straight-chained C₁₋₃₀ alkyl group, a branched C₃₋₃₀ alkyl group, a cyclic C₃₋₃₀ alkyl group, a C₆₋₃₀ aralkyl group, and a C₆₋₃₀ alkaryl group; and
R³ is either a hydrogen atom or a group -C(O)OR⁴ in which R⁴ is a straight-chained C₁₋₃₀ alkyl group or a branched C₃₋₃₀ alkyl group).

As used herein, the term "alkylene" refers to a saturated, linear or branched divalent carbon chain. As used herein, the term "alkyl" refers to a saturated hydrocarbon group which may be straight-chained, branched or cyclic. As used herein, the term "aralkyl" refers to an aryl-substituted alkyl group. As used herein, the term "alkaryl" refers to an alkyl-substituted aryl group. As used herein, the term "aryl" refers to an aromatic ring system. Such a ring system may be monocyclic or bicyclic and contains at least one aromatic ring. Where it contains a bicyclic ring, this may be fused. Preferably, an aromatic ring system will contain from 6-20 carbon atoms, for example 6 or 10 carbon atoms. A preferred aryl group is phenyl.

In one set of embodiments, R¹ and R² in formula (I) are independently selected from a straight-chained C₁₋₃₀ alkyl group and a branched C₃₋₃₀ alkyl group. Preferably R¹ and R² in formula (I) are independently selected from a straight-chained C₆₋₁₂ alkyl group and a branched C₆₋₁₂ alkyl group. More preferably, R¹ and R² in formula (I) are independently selected from a straight-chained C₈₋₁₀ alkyl group and a branched C₈₋₁₀ alkyl group. In one set of embodiments, R¹ and R² in formula (I) are independently selected from a straight-chained C₈₋₁₀ alkyl group, preferably a straight-chained C₈ or C₁₀ alkyl group. In one set of embodiments, R¹ and R² in formula (I) are independently selected from a branched C₈₋₁₀ alkyl group, preferably from a branched C₉ alkyl group.

In one set of embodiments, R¹ and R² in formula (I) are identical.

In one set of embodiments, R in formula (I) is a straight-chained C₂₋₁₀ alkylene group or a branched C₃₋₁₀ alkylene group. Preferably R in formula (I) is a straight-chained C₂₋₆ alkylene group or a branched C₃₋₆ alkylene group. In one set of embodiments, R in formula (I) is a straight-chained C₂₋₆ alkylene group such as a C₂ alkylene, C₃ alkylene or C₄ alkylene. Where R is a straight-chained C₄ alkylene group, the compounds of formula (I) are adipic acid esters. Plasticizers which are adipic acid esters are commercially available from various suppliers, for example from BASF (Germany) under the tradenames Plastomoll DOA and Plastomoll DNA.

In one set of embodiments, R in formula (I) is a group of formula 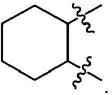 In this set of embodiments, the compounds of formula (I) are 1,2-cyclohexane polycarboxylic acid esters such as 1,2-di-C₅₋₁₁-cyclohexane dicarboxylic acid esters, preferably 1,2-di-C₉₋₁₁-cyclohexane dicarboxylic acid esters. Non-limiting examples of such compounds of formula (I) include 1 ,2-cyclohexane dicarboxylic acid diisobutyl ester, 1,2-cyclohexane dicarboxylic acid diisopentyl ester, 1,2-cyclohexane dicarboxylic acid diisoheptyl ester, 1,2-cyclohexane dicarboxylic acid di(2-ethylhexyl) ester, 1,2-cyclohexane dicarboxylic acid diisononyl ester, 1,2-cyclohexane dicarboxylic acid diisodecyl ester. In a preferred set of embodiments the 1,2-cyclohexane polycarboxylic acid ester is a 1,2-cyclohexane dicarboxylic acid diisononyl ester.

In one set of embodiments, R in formula (I) is a group of formula 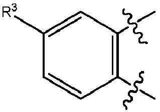 wherein R³ is either a hydrogen atom or a group -C(O)OR⁴ in which R⁴ is a straight-chained C₁₋₃₀ alkyl group or a branched C₃₋₃₀ alkyl group. When R³ is a hydrogen atom, the compounds of formula (I) are diester oils which are phthalic acid esters (also known as "phthalates"). When R³ is a group -C(O)OR⁴, the compounds of formula (I) are triester oils which are trimellitic acid esters (also known as "trimellitates").

When R³ is a group -C(O)OR⁴, R⁴ is either a straight-chained C₁₋₃₀ alkyl group or a branched C₃₋₃₀ alkyl group. In one set of embodiments, R⁴ is a straight-chained C₆₋₁₂ alkyl group or a branched C₆₋₁₂ alkyl group, preferably a straight-chained C₈₋₁₀ alkyl group or a branched C₈₋₁₀ alkyl group. In one set of embodiments, R⁴ is a straight-chained C₈₋₁₀ alkyl group, for example a straight-chained C₈ or C₁₀ alkyl group. In one set of embodiments, R⁴ is a branched C₈₋₁₀ alkyl group, preferably a branched C₉ alkyl group.

In one set of embodiments, R in formula (I) is a group of formula 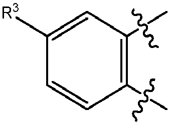 wherein R³ is a group -C(O)OR⁴ and in which R⁴ is identical to R¹ and R².

Plasticizers which are phthalic acid esters are commercially available from various suppliers, for example from BASF (Germany) under the tradenames Palatinol TOTM and Palatinol 610 TM. Plasticizers which are trimellitic acid esters are also commercially available from various suppliers, for example from BASF (Germany) under the tradenames Palatinol DOP, Palatinol N, Palitinol DPHP, Palatinol 610, Palatinol 911 and Palatinol 10P.

In one set of embodiments, the second plasticiser for use in the invention is a diester oil containing a compound of formula (II), (III) or (IV):

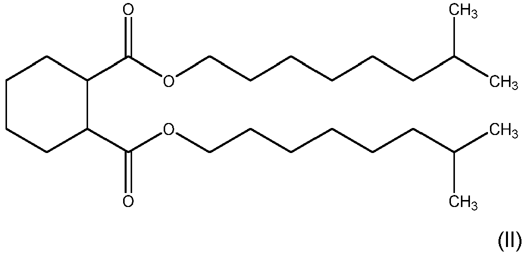

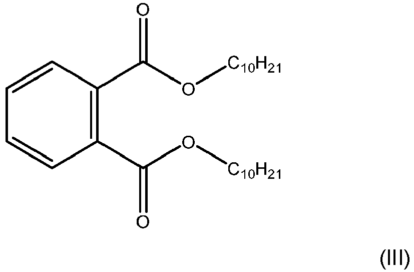

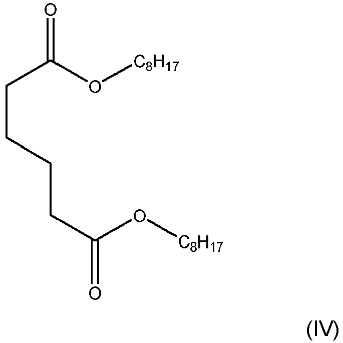

The compound of formula (II) is 1,2-cyclohexane dicarboxylic acid diisononyl ester and is commercially available as Hexamoll^{™} DINCH (BASF, Germany), for example. The compound of formula (III) is a phthalic acid ester of a C10 alcohol and is commercially available as Palatinol 10P (BASF, Germany), for example. The compound of formula (IV) is di-octyl adipate and is commercially available as Plastomoll DOA (BASF, Germany), for example.

An appropriate amount of the second plasticiser present in the rubber composition may readily be selected by those skilled in the art. In one set of embodiments, the second plasticizer is present in an amount in the range from about 5 to about 60 phr, preferably from about 10 to about 50 phr, more preferably from about 15 phr to about 45 phr, for example from about 18 phr to about 40 phr.

In one set of embodiments, the second plasticizer is present in an amount greater than 15 phr with respect to 100 phr of the rubber composition. For example, the second plasticizer may be present in an amount in the range from greater than 15 phr to about 60 phr, preferably in the range from greater than 15 phr to about 50 phr, more preferably in the range from greater than 15 phr to about 45 phr.

The first plasticizer is a hydrocarbon resin or combination of hydrocarbon resins. As used herein, the term "resin" refers to a compound which is solid at ambient temperature (18 to 25°C) in contrast to a liquid plasticizing compound, such as an oil. Hydrocarbon resins are polymers obtained from the polymerisation of unsaturated hydrocarbons. They are essentially based on hydrogen and carbon and are well known to those skilled in the art.

As will be understood, the hydrocarbon resin or combination of hydrocarbon resins for use in the invention should be miscible with a diene rubber component as herein described such that it can function as a plasticizer to enhance dispersion of the rubber components during compounding. A wide range of such hydrocarbon resins are known and used in the production of rubber compositions, in particular in the production of tire treads, including aliphatic resins, aromatic resins, and aliphatic/aromatic resins. Such resins can be natural or synthetic, they may or may not be petroleum-based, and may be partially or fully hydrogenated in order to control the aliphatic and aromatic content of the resin. Preferably, such resins will be exclusively hydrocarbon, i.e. they comprise only hydrogen and carbon atoms. The term "hydrogenated resin" refers to a resin obtained by subjecting a resin to reductive hydrogenation. Hydrogenation may be partial, thus giving rise to a "partially hydrogenated resin" or it may be substantially complete thereby producing a "fully hydrogenated" resin.

In one set of embodiments, the hydrocarbon resin(s) for use in the invention are selected from the group consisting of: cyclopentadiene (abbreviated to "CPD") homopolymer or copolymer resins; dicyclopentadiene (abbreviated to "DCPD") homopolymer or copolymer resins; terpene homopolymer or copolymer resins; rosinic resins such as rosin esters; C₅ homopolymer or copolymer resins which may be partially or fully hydrogenated; C₉ homopolymer or copolymer resins which may be partially or fully hydrogenated; alpha-methyl-styrene homopolymer or copolymer resins; and mixtures thereof.

As used herein, the term "C₅ resin" refers to a resin obtained by polymerisation of a cracked naphtha feed that contains C₅ monomers. C₅ monomers include olefins, linear conjugated diolefins and cyclic conjugated diolefins. Other monomers may additionally be present in the feed and these include, but are not limited to, dicyclopentadiene (DCPD). In one embodiment, the C₅ resin may be obtained by co-polymerisation of C₅ monomers and DCPD monomers. The term "C₉ resin" refers to a C₉ synthetic petroleum resin and examples include a polymer obtained by polymerization using a Friedel-Crafts catalyst such as AlCl₃ or BF₃. Examples of the C₉ resin include a copolymer containing indene, styrene, α-methyl styrene, vinyl toluene, or the like as main components. The term "terpene resin" refers to resins obtained by polymerisation of terpene monomers selected from α-pinene, β-pinene and limonene.

In one set of embodiments, the hydrocarbon resin(s) for use in the invention are selected from CPD/vinyl-aromatic copolymer resins; DCPD/vinyl-aromatic copolymer resins; CPD/terpene copolymer resins; DCPD/terpene copolymer resins; CPD/C₅ copolymer resins; DCPD/C₅ copolymer resins; CPD/C₉ copolymer resins; DCPD/C₉ copolymer resins; terpene/vinyl-aromatic copolymer resins; terpene/phenol copolymer resins; C₅/vinyl-aromatic copolymer resins; C₉ /vinyl-aromatic copolymer resins; and mixtures thereof. Suitable vinyl-aromatic monomers for use in production of the resins include, but are not limited to, styrene and α-methylstyrene.

In one set of embodiments, the hydrocarbon resin for use in the invention is a C₅ homopolymer or copolymer resin, preferably a fully or partially hydrogenated C₅ homopolymer or copolymer resin.

In one set of embodiments, the hydrocarbon resin is a terpene resin such as a polyterpene resin, a terpene phenolic resin, or a terpene styrenated resin. Preferably, the terpene resin is a polyterpene resin such as one produced by co-polymerisation of α-pinene and β-pinene.

Examples of suitable hydrocarbon resins for use in the invention are well known to those skilled in the art and are commercially available. Preferred resins include C₅ resins, such as that commercially available from Exxon Mobil Corporation under the tradename Escorez^{™} 5300; and polyterpene resins, such as that commercially available from DRT under the tradename Dercolyte M115. Dercolyte M115 is a bio-based resin produced from the copolymerisation of α-pinene and β-pinene.

An appropriate amount of the first plasticiser present in the rubber composition may readily be selected by those skilled in the art. In one set of embodiments, the first plasticizer is present in an amount in the range from about 5 to about 60 phr, preferably from about 10 to about 50 phr, more preferably from about 15 phr to about 45 phr, for example from about 18 phr to about 40 phr.

The total amount of the plasticizing component present in the rubber composition can readily be selected by those skilled in the art. In one set of embodiments, the total amount of the plasticizing component is in the range from about 20 phr to about 100 phr, preferably from about 25 phr to about 95 phr, more preferably from about 30 phr to about 90 phr, for example from about 35 phr to about 90 phr. In one set of embodiments, the total amount of the plasticizing component in the rubber composition is greater than 20 phr.

In one set of embodiments, the weight ratio of the first plasticizer to the second plasticizer is the range from 10:90 to 90:10. In other embodiments, the weight ratio of the first plasticizer to the second plasticizer is in the range from 15:85 to 85:15, from 20:80 to 80:20, from 30:70 to 70:30, or from 40:60 to 60:40, for example about 50:50.

In one set of embodiments, the rubber compositions according to the invention are substantially free from (e.g. free from) any petroleum-based rubber processing oils such as TDAE.

In the rubber compositions according to the invention, the rubber component comprises one or more diene elastomers. As used herein, the term "diene elastomer" refers to a rubber comprising repeat units derived from at least one diene monomer, i.e. a monomer having two carbon-carbon double bonds which may be conjugated or non-conjugated but which typically may be conjugated. It includes homopolymers and copolymers having one or more additional units derived from monomers co-polymerisable with the diene monomer(s). The repeat units of the diene elastomer have a carbon-carbon double bond which may be present in the backbone and/or in a side-chain of the polymer. A diene elastomer may be natural or synthetic. Non-limiting examples of diene elastomers include natural rubber (NR), isoprene rubber (IR), epoxidized natural rubber (ENR), acrylonitrile-butadiene rubber (NBR), chloroprene rubber (CR), butyl rubber, butadiene rubber (BR), styrene-butadiene rubber (SBR), styrene-isoprene-butadiene rubber (SIBR) and ethylene-propylene-diene rubber (EPDM).

Diene rubbers can be modified with one or more functional groups and any such functionalised diene rubbers may be used in the invention. Where the diene rubber is functionalised, any of its polymer backbone, terminal groups and/or side chains may be bound to one or more functional groups. These functional groups may be incorporated into the polymer material during its production or, alternatively, they may be subsequently grafted onto the polymer. The type and position of any functional groups varies in different rubber grades known in the art. The choice of any functionalised rubber will depend on the intended use of the rubber compounds herein described. Examples of functionalised diene rubbers include those which carry one or more reactive groups (e.g. alkoxysilyl groups) and/or one or more interacting groups (e.g. amino groups). Interacting groups such as amino groups may, for example, form hydrogen bonds within the rubber matrix. In one set of embodiments, the diene rubber for use in the invention is functionalised. In one set of embodiments, the diene rubber for use in the invention is non-functionalised.

In one set of embodiments, the diene rubber for use in the invention is one suitable for use in the production of a rubber compound which can be used as a tire component, such as a tire tread. The diene rubber to be used in the invention may, for example, include functionalised or non-functionalised styrene butadiene rubber (SBR).

In one set of embodiments, the diene elastomer for use in the invention contains repeat units derived from butadiene. Examples of such rubbers include, but are not limited to, styrene butadiene rubber (SBR) and butadiene rubber (BR).

Styrene-butadiene rubber is well known in the art. The term "styrene-butadiene rubber" or "SBR" as used herein is intended to refer generally to any synthetic rubber made by polymerisation of styrene and butadiene monomers. It thus refers to any styrene-butadiene copolymer and is intended to include both functionalised and non-functionalised SBR. SBR is commonly used in the tire industry and can be made by well-known methods, such as by co-polymerisation of the corresponding monomers in emulsion, suspension or in solution. In one set of embodiments, the styrene butadiene copolymer for use in the invention may be a solution-polymerised styrene butadiene rubber (SSBR) or an emulsion-polymerised styrene butadiene rubber (ESBR). By "emulsion-polymerised styrene butadiene rubber" is meant that styrene and 1,3-butadiene are copolymerised as an aqueous emulsion. Such a method is well known and understood by those skilled in the art. Preferred for use in the invention are SBRs that are made by solution polymerisation. Styrene and butadiene monomers may be selected in suitable ratios according to the intended use and properties of the rubber compound. For example, styrene may be present in an amount of up to 80 wt.%, more typically up to about 45 wt.% for rubber tire tread compounds (wt.% based on the total weight of the comonomers). The diene component will generally be present in an amount of at least 50 wt.%. Tread compounds are required to have good viscoelastic properties due to their road contact when in use, as well as properties such as rolling resistance and traction on wet surfaces. Suitable amounts of styrene to achieve such properties are well known in the tire industry and may readily be selected by those skilled in the art.

The selected diene rubber can be used as 100 parts of the rubber in the compounds herein described, or it may be blended with any conventionally employed elastomer for rubber compounding or blends thereof, including both natural and synthetic rubbers. Blends of different diene rubbers may be used. Rubbers suitable for use in any blend are well known to those skilled in the art and include natural rubber, synthetic polyisoprene rubber, styrene-isoprene rubber, styrene-butadiene rubber, styrene-isoprene-butadiene rubber, butadiene-isoprene rubber, polybutadiene, butyl rubber, neoprene, acrylonitrile-butadiene rubber (NBR), ethylene acrylic rubber, ethylene-propylene rubber, ethylene-propylene terpolymer (EPDM), ethylene vinyl acetate copolymer, epichlorohydrin rubber, chlorinated polyethylene-propylene rubbers, chlorosulfonated polyethylene rubber, hydrogenated nitrile rubber, and tetrafluoroethylene-propylene rubber. The ratio of any polymer blends can be selected according to need, for example based on the viscoelastic properties of the rubber compound. Those skilled in the art can readily determine which elastomers may be appropriate and their relative amounts to provide a desired viscoelastic property range.

In a preferred embodiment, the selected diene rubber for use in the invention will be SBR. This may be used alone or as a blend with any of the other rubbers mentioned herein. Binary blends are preferred. In one set of embodiments, SBR may be used in combination with a butadiene rubber, for example a high cis-1,4-polybutadiene polymer. Polybutadienes having a cis-1,4-linkage content of at least 90% may be preferred.

When used in combination with a butadiene rubber the amount of SBR in the blend may range from about 50 to about 90 phr, preferably from about 60 to about 90 phr, more preferably from about 70 to about 80 phr, e.g. about 80 phr. The amount of butadiene rubber may range from about 10 to about 50 phr, preferably from about 10 to about 40 phr, more preferably from about 20 to about 30 phr, e.g. about 20 phr. A binary blend of SBR : butadiene rubber in which the components are present in a weight ratio of about 80:20 is particularly preferred.

Commercially available sources of SBR include Synthos, Germany. A non-limiting example of a styrene butadiene rubber for use in the invention is Sprintan 4601 (Synthos, Germany). Commercially available sources of butadiene rubber include Arlanxeo, Germany. A non-limiting example of a butadiene rubber for use in the invention is Buna CB24 (Arlanxeo, Germany).

The rubber compositions according to the invention include a reinforcing filler. Such components are well known for use in rubber compositions and suitable materials may readily be selected by those skilled in the art. These include inorganic fillers, such as silica, organic fillers such as carbon black and blends of different types of fillers. Reinforcing fillers may, for example, be selected from silica, carbon black, carbon nanotubes, short carbon, polyamide, polyester, natural fibres, calcium carbonate, clay, alumina, aluminosilicates, and any mixtures thereof. The use of silica, carbon black and blends of silica and carbon black are generally preferred. In one embodiment the rubber compositions may also comprise aluminium hydroxide as an additional inorganic filler.

The amount of reinforcing filler can readily be determined by those skilled in the art according to need. In one set of embodiments, the amount of reinforcing filler is in the range from about 50 to about 110 phr, preferably from about 70 to about 90 phr, for example about 80 phr, with respect to 100 phr of the rubber composition.

In one embodiment, the reinforcing filler comprises a silica filler. The term "silica filler" as used herein refers to particulate silica. Any known type of particulate silica capable of reinforcing a diene rubber-based composition may be used. As will be understood, known silica materials typically contain a proportion of other components (e.g. as impurities), but the main component will be silicon dioxide, i.e. SiO₂. The content of silicon dioxide will generally be at least 90 wt.%, preferably at least 95 wt.%, e.g. at least 97 wt.%.

Silica materials for use in the invention are well known in the art and include, in particular, precipitated amorphous silica, wet silica (hydrated silicic acid), dry silica (anhydrous silicic acid), fumed silica, calcium silicate, aluminium silicate, magnesium silicate (e.g. Mg₂SiO₄, MgSiO₃), magnesium calcium silicate (CaMgSiO₄), and aluminium calcium silicate (e.g. Al₂O₃.CaO₂SiO₂). A single silica or combination of two or more types of silica may be used. The silica is used in the form of discrete particles, i.e. as a granulate which is highly dispersible. It may be monodisperse in size and uniform in shape. Alternatively, it may be provided in the form of branched or linear clusters. Precipitated silica material is preferred in view of its ability to impart to tread components excellent rolling resistance and wet traction. Silica for use in the invention may have a specific surface area (e.g. nitrogen-specific absorption surface area) in the range of from 50 to 350 cm²/g, preferably from 80 to 280 cm²/g, for example from 120 to 230 cm²/g. The average particle size of the silica may range from about 5 nm to about 50 nm, preferably from about 6 nm to about 35 nm, e.g. from about 7 nm to about 28 nm. Commercial grades of silica for use in the invention are widely available from suppliers such as Evonik (Germany) and include, for example, Ultrasil^{®} 7000 GR.

In one set of embodiments, the reinforcing filler is a silica filler and is present in an amount in the range from about 50 to about 110 phr, preferably from about 70 to about 90 phr, for example about 80 phr, with respect to 100 phr of the rubber composition.

Any silica for use in the invention may be employed together with one or more silane coupling agents as herein described. These help to bind the silica to the diene elastomer component(s) of the rubber composition.

Rubber compositions in accordance with the invention may be made using methods known in the art in the manufacture of rubber compositions, such as compounding with other components. These further components can include additional polymers, curing systems (such as vulcanising agents, vulcanisation accelerators, and vulcanisation accelerator auxiliaries), anti-degradants (such as antioxidants or antiozonants), pigments, fillers (such as silica and/or carbon black fillers as herein described), compatibilising agents for the fillers (such as silane coupling agents or covering agents as herein described), fibres, etc. Those skilled in the art can readily select a combination of vulcanizable rubber compounds and their respective amounts for subsequent mixing and vulcanization according to the specific rubber product which is desired.

Methods for the preparation of the rubber compositions herein described form a further aspect of the invention. In another aspect, the invention thus provides a process for producing a rubber composition, said process comprising the step of compounding the components (a), (b) and (c) as herein described.

In some embodiments, in addition to the rubber component, reinforcing filler and plasticizing component as herein described, a vulcanizable composition may contain one or more of the following: vulcanisation activators (e.g. zinc oxide, stearic acid, etc.), vulcanising agents (e.g. sulfur or sulfur-donating compounds), vulcanisation accelerators, anti-degradants (e.g. anti-oxidants, anti-ozonants, etc.), pigments, compatibilising agents, and silane coupling agents. Zinc oxide and stearic acid function as activators in the vulcanisation process by shortening the vulcanisation time and impact the length and number of cross-links in the rubber matrix that forms during curing or vulcanisation. Depending on the intended use of the sulfur-vulcanized material, these additives can be selected and used in the conventional amounts.

The vulcanising agent of the rubber compositions is not particularly limited and may be any of those generally known in the art. For example, the vulcanising agent may be sulfur. The amount of the vulcanising agent is not particularly limited, and an amount effective to achieve a satisfactory cure of the composition may readily be selected by those skilled in the art. The vulcanising agent (e.g. sulfur) may be used in an amount in the range from about 0.1 to about 10 phr, preferably from about 0.1 to about 5 phr, e.g. from about 0.2 to about 3 phr. For example, the rubber composition may contain from 0.3 to 2 phr, preferably from 0.5 to 1.5 phr, of the vulcanising agent.

The vulcanisation accelerator for use in the rubber composition is not particularly limited and may be any of those generally known in the art. Accelerators include thiazoles, dithiocarbamates, thiurams, guanidines, and sulphonamides. Examples of suitable accelerators include thiazole type vulcanization accelerators such as 2-mercaptobenzothiazole (MBT), dibenzothiazyl disulphide (MBTS), N-cyclohexyl-2-benzothiazyl sulfenamide (CBS), and N-tert-butyl-2-benzothiazolyl sulfenamide (TBBS); guanidine type vulcanization accelerators such as 1,3-diphenyl guanidine (DPG); thiuram-based vulcanization accelerators such as tetramethyl thiuram disulphide, tetrabutyl thiuram disulfide, tetradodecyl thiuram disulfide, tetraoctyl thiuram disulfide, and tetrabenzyl thiuram disulfide; and dithiocarbamate compounds such as dimethyl dithiocarbamate zinc; and other dialkyl dithiophosphoric acid zinc. Preferably, the vulcanisation accelerator may be a combination of N-tert-butyl-2-benzothiazolyl sulfenamide (TBBS) and 1,3-diphenyl guanidine (DPG). The amount of vulcanisation accelerator for use in the compositions is not particularly limited and may, for example, be in the range from about 0.5 to about 10 phr, preferably from about 1 to about 8 phr, more preferably from about 2 to about 6 phr. Preferably, the vulcanisation accelerator may comprise N-tert-butyl-2-benzothiazolyl sulfenamide (TBBS) in an amount from 1 to 2 phr, and 1,3-diphenyl guanidine (DPG) in an amount of 1 to 3 phr.

The vulcanisation accelerator auxiliary for use in the rubber compositions is not particularly limited and may be any of those known to the person skilled in the art. For example, the vulcanisation accelerator auxiliary may be zinc oxide (ZnO) and a fatty acid. The fatty acid may be any of saturated or unsaturated, or linear or branched fatty acid. The number of carbon atoms of the fatty acid is also not particularly limited, but may be from 1 to 30, or from 15 to 30. For example, the fatty acid may be one or more selected from the group consisting of cyclohexanoic acids (cyclohexane carboxylic acid), naphthenic acids having a side chain such as alkyl cyclopentane, saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid), unsaturated fatty acids such as methacrylic acid, oleic acid, linolic acid and linolenic acid, and resin acids such as rosin, tall oil acid and abietic acid. Preferably the vulcanisation accelerator auxiliary of the present invention is zinc oxide (ZnO) and stearic acid. The total amount of the vulcanisation accelerator auxiliary is not particularly limited, but may be from 1 to 10 phr, preferably from 1.5 to 7 phr, for example, from 2 to 5 phr. Preferably, zinc oxide may be used in an amount of from about 1 to about 10 phr, preferably from about 2 to about 5 phr, more preferably from about 2 to about 3 phr. Stearic acid may be used in an amount of from about 1 to about 5 phr, preferably from about 1.5 to about 3 phr.

The antidegradant for use in the rubber compositions of the present invention is not particularly limited and may be any of those known to the person skilled in the art. The antidegradant may be an antioxidant and/or an antiozonant. For example, the antidegradant may be one or more selected from the group consisting of N-(1,3-dimethylbutyl)-N'-phenyl-p-phenylenediamine (6PPD) and 2,2,4-trimethyl-1,2-dihydroquinoline polymer (TMQ). The amount of each antidegradant may be from 0.1 to 3 phr, preferably from 0.2 to 2 phr. The total amount of antidegradant may be from 0.1 to 5 phr, preferably 1 to 3 phr.

Covering agents may be used to reduce the formation of silica aggregates during compounding. If present, these may be used in an amount of up to 5 phr, preferably from about 1 to about 3 phr. In one embodiment, no additional covering agents are present. The covering agent is not particularly limited and may be any of those known in the art. Suitable silica-based covering agents include silanes such as alkylalkoxy silanes, e.g. hexadecyltrimethoxy silane, octyltriethoxy silane and hexyltrimethoxy silane. In one embodiment, the covering agent may be grafted beforehand onto the polymer. It may also be used in the free state (i.e. not grafted beforehand) or grafted to the surface of the silica.

Coupling agents which bind to the silanol groups of silica in order to inhibit the agglomeration thereof and which also function to covalently link the silica fillers to the diene elastomers may be present. The appropriate amount of any coupling agent can be determined by those skilled in the art having in mind factors such as its molecular weight, the number of functional groups it contains and its reactivity. Most coupling agents may be used in an isomolar amount based on the amount of silica. The coupling agent for use in the rubber compositions of the present invention is not particularly limited and may be any of those known to the person skilled in the art. In one embodiment, the coupling agent may be grafted beforehand onto the polymer. It may also be used in the free state (i.e. not grafted beforehand) or grafted to the surface of the silica.

Typically, the coupling agent will be a silane coupling agent, for example a bifunctional silane. For example, the silane coupling agent may be one or more selected from the group consisting of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl)tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-octanoylthio-1-propyltriethoxysilane, mercaptopropyl-mono-ethoxy-dipolyethersilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N dimethylthiocarbamoyl tetrasulfide, and dimethoxymethylsilylpropylbenzothiazolyl tetrasulfide. Preferably, the silane coupling agent is bis(3-triethoxysilylpropyl) disulfide. A specific example of the silane coupling agent for use in the invention is Si 75 from Evonik Industries, Germany. The amount of the silane coupling agent is not particularly limited, but may be from 2 to 20 phr, preferably from 3 to 18 phr, more preferably from 4 to 15 phr, for example from 5 to 10 phr.

The rubber compositions according to the invention may be prepared by methods known in the art and will involve mixing (i.e. compounding) of the rubber component, reinforcing filler and plasticizing component, and any other components herein described to produce a rubber composition for subsequent vulcanization.

According to a further aspect, the present invention provides a method of producing a rubber product comprising the steps of: compounding the rubber composition as herein described to form a rubber compound; forming (e.g. moulding) the rubber compound into a desired shape; and vulcanising the rubber compound.

In preparing the rubber composition of the invention, the method for combining each of the components is not limited and any of the methods known in the art may be used. For moulding the rubber composition into any desired shape, any known moulding machine such as an extrusion moulding machine or press moulding machine may be used.

Mixing of the components will usually be carried out in stages in which the components may be added. Multi-step mixing processes are generally preferred to optimise dispersion of the reinforcing filler and may involve the use of more than one mixer, for example different mixers arranged in series. For example, in the case of mixing a tire tread compound, the mixing process may involve an initial mixing stage in which a masterbatch is produced, followed by one or more additional non-productive mixing stages, and finally a productive mixing stage in which the curative agents (i.e. sulfur or sulfur-donating agents and accelerator(s)) are added. Mixers which may be used are well known in the art and include, for example, an open mill or a Banbury type mixer having tangential or intermeshing rotors.

Typically, the rubber component, reinforcing filler, plasticizing component, zinc oxide, stearic acid, anti-degradants (e.g. anti-oxidants, anti-ozonants) (where present), pigments (where present), compatibilising agents (where present), and coupling agents (where present) are mixed to produce the initial masterbatch. This initial masterbatch may be followed by a non-productive mixing stage in which no additional components are added. Any non-productive mixing stage may be used to further disperse the components (e.g. the reinforcing filler) within the rubber, or to decrease the viscosity of the mixed rubber compound.

During mixing, the temperature is kept below a predetermined level to avoid premature cross-linking of the composition. Typically, the temperature may be kept below 150°C, preferably below 140°C. In producing the initial masterbatch, mixing may for example be carried out a temperature of from about 80 to about 110°C, e.g. about 100°C. In the non-productive mixing stage the temperature may be raised, for example up to about 150°C, e.g. about 130°C. If any additional compatibilising agents are added during mixing, it may be necessary to carry out mixing at higher temperatures to ensure that these react with the silica surface (where any silica filler is present). Mixing times may vary but can readily be determined by those skilled in the art based on the composition of the mixture and the type of mixer used. Generally a mixing time of at least 1 minute, preferably between 2 and 30 minutes, should be sufficient to obtain the desired homogenous composition.

A final mixing stage involves the addition of curatives, including accelerator(s), anti-degradants. The temperature for this mixing stage will generally be lower, for example in the range of from about 40 to about 60°C, e.g. about 50°C. This final mix may also be followed by a further non-productive mixing stage in which no additional components are added.

The most appropriate type of mixing can readily be selected to achieve a vulcanizable rubber compound. Mixing speeds may readily be determined, but may for example range from a speed of from about 20 to about 100 rpm, e.g. from about 30 to about 80 rpm, preferably about 50 rpm.

The vulcanizable rubber compound may be provided as an uncured (so-called "green") tire component for final vulcanisation that cures the composition. Curing to cross-link the rubber components may be carried out by known methods. In the tire industry, for example, an uncured rubber ("green body") is produced followed by curing in a press mold which concurrently cross-links the rubber components and molds the components into a final tire. Vulcanisation cures the rubber by cross-linking, principally via sulfur cross-links. Vulcanisation methods and conditions for hardening the rubber composition are well known to those skilled in the art. Appropriate vulcanisation conditions typically include heating to a temperature in the range from 120 to 200°C, e.g. from 140 to 180°C, for a duration of from 5 to 180 mins, e.g. from 5 to 120 mins.

Vulcanizable rubber compositions form a further aspect of the invention. In another aspect, the invention thus provides a vulcanizable rubber composition comprising:
(a) a rubber component comprising one or more diene elastomers;
(b) a reinforcing filler; and
(c) a plasticizing component comprising:
   (i) a first plasticizer which is a hydrocarbon resin, or combination of hydrocarbon resins; and
   (ii) a second plasticizer which is a di- or tri-ester oil containing a compound of general formula (I): 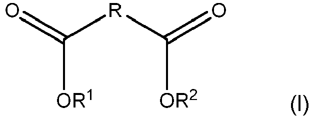
      (wherein R is a straight-chained C₂₋₁₀ alkylene group, a branched C₃₋₁₀ alkylene group, or a group having the structure: 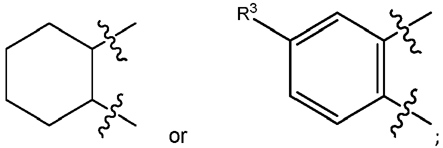
      R¹ and R² are independently selected from the group consisting of a straight-chained C₁₋₃₀ alkyl group, a branched C₃₋₃₀ alkyl group, a cyclic C₃₋₃₀ alkyl group, a C₆₋₃₀ aralkyl group, and a C₆₋₃₀ alkaryl group; and
      R³ is either a hydrogen atom or a group -C(O)OR⁴ in which R⁴ is a straight-chained C₁₋₃₀ alkyl group or a branched C₃₋₃₀ alkyl group).

Vulcanised rubber compounds obtained by, directly obtained by, or obtainable by cross-linking any vulcanizable rubber composition as herein described are also part of the invention.

Methods of producing a vulcanised rubber composition also form part of the invention. In another aspect, the invention thus provides a process for producing a vulcanized rubber composition, said process comprising the steps of compounding components (a), (b) and (c) as herein described whereby to produce a vulcanizable rubber composition; and subjecting said vulcanizable rubber composition to vulcanization by heating to a predetermined temperature and for a predetermined time.

The rubber compositions herein described find particular use in the manufacture of vehicle tires, in particular in the manufacture of tire components such as tire treads. Tire treads may be used for tires for any vehicle, but they find particular use in the manufacture of tire treads for motor cars. Other uses for the rubber compounds include as vibration dampers, sidewall rubbers, inner liner rubbers, bead filler rubbers, body ply rubbers, skim shock rubbers and tread rubbers.

In another aspect, the invention thus provides the use of a rubber composition as herein described as a component of a vehicle tire or in the manufacture of a component of a vehicle tire.

In another aspect, the invention provides a vehicle tire component, such as a tire tread, made from a rubber composition as herein described. A vehicle tire comprising the vehicle tire component also forms part of the invention.

The assembly of the components of a tire and production methods are well-known in the art. Assembly of the "green" tire is followed by compression molding in a suitable mold in which vulcanisation produces the final tire.

The rubber compounds according to the invention may also be used for non-tire applications, such as in the manufacture of hoses and seals.

The invention is illustrated further by way of the following non-limiting Examples and the accompanying figures in which:

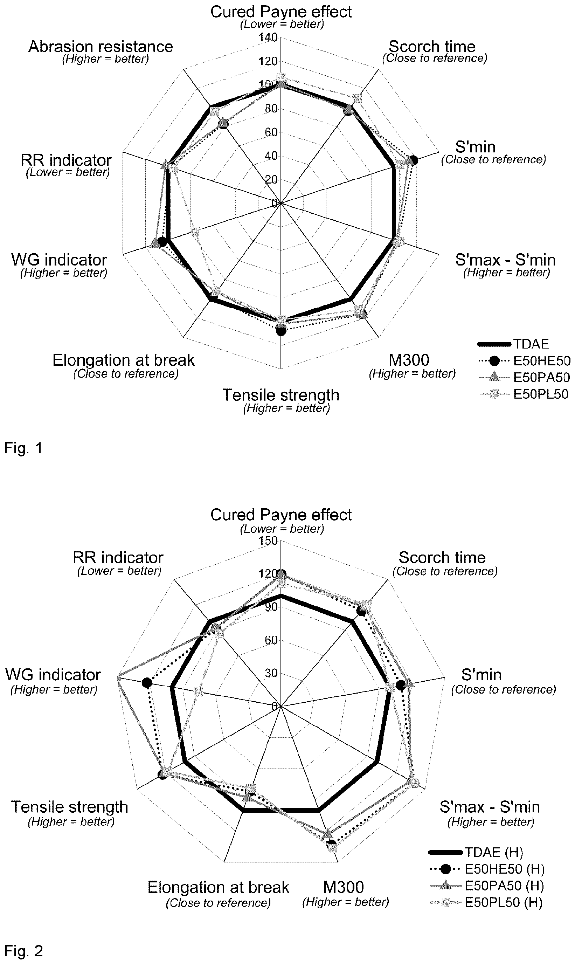

Figure 1 - Spider diagram showing the performance of rubber compositions according to the invention containing a 50:50 blend of Escorez 5300 ("E") and a diester oil (Hexamoll^{™} DINCH ("HE"), Palatinol 10P ("PA") or Plastomoll DOA ("PL")) compared to a reference rubber composition containing TDAE. The amount of the plasticizing component is 37.5 phr.
Figure 2 - Spider diagram showing the performance of rubber compositions according to the invention containing a 50:50 blend of Escorez 5300 ("E") and a diester oil (Hexamoll^{™} DINCH ("HE"), Palatinol 10P ("PA") or Plastomoll DOA ("PL")) compared to a reference rubber composition containing TDAE. The amount of the plasticizing component is 80 phr.

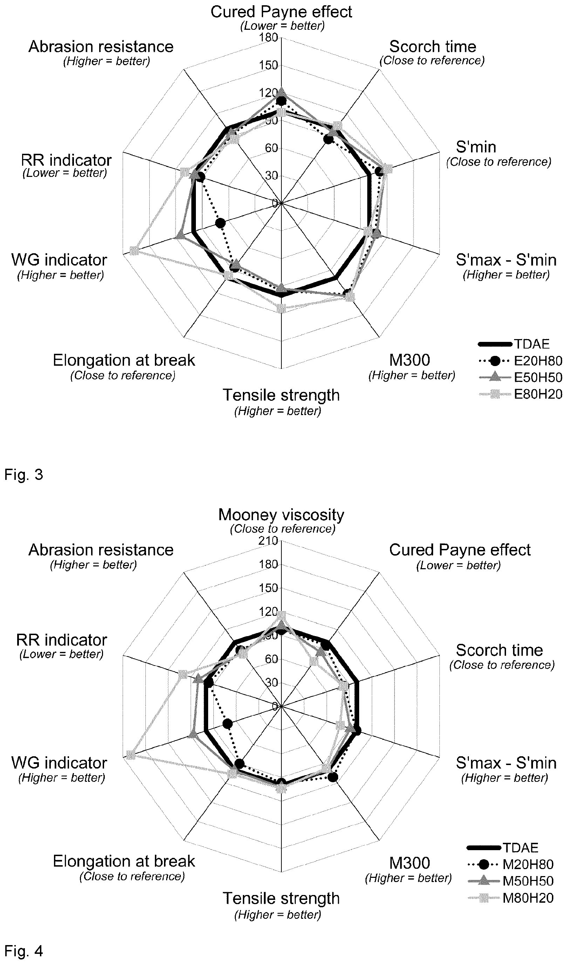

Figure 3 - Spider diagram showing the performance of rubber compositions according to the invention containing 20:80, 50:50 and 80:20 blends of Escorez 5300 ("E") and Hexamoll^{™} DINCH ("HE") compared to a reference rubber composition containing TDAE.
Figure 4 - Spider diagram showing the performance of rubber compositions according to the invention containing 20:80, 50:50 and 80:20 blends of Dercolyte M115 ("M") and Hexamoll^{™} DINCH ("HE") compared to a reference rubber composition containing TDAE.

### Examples

### Testing Procedures:

### Mooney viscosity

Mooney viscosity is a measure of the stiffness of the uncured compounds. Mooney viscosity was measured for un-vulcanized samples using the Mooney Viscosimeter MV 2000 VS (Alpha Technology) equipped with a large rotor according to ISO 289-1. The Mooney viscosity values selected for evaluation were obtained after 5 minutes (1 minute of pre-heating and 4 minutes of testing). Mooney viscosity is expressed in "Mooney unit" (MU).

### Vulcanization

A Rubber Process Analyzer TA Elite (TA Instruments, New Castle, USA) was used to measure the optimal vulcanization time. A frequency of 1.667 Hz and deformation of 6.98% were applied and a temperature of 160°C was used. The time to reach 90% of conversion (t90) was used to cure the samples. The rubber samples were vulcanized at a temperature of 160°C and under a pressure of 100 bar in a Wickert WLP 1600 hydraulic press (Wickert, Germany). The scorch time (ts) refers to "t2" which is the time until two torque units rise above minimum torque (ML). Optimum curing time (t90) refers to the point in the cure curve at which 90% of the maximum torque (MH) has been reached. Minimum Torque (ML) and Maximum Torque (MH) refers to the lowest and highest values, respectively, in the cure curve. The difference in torque refers to the difference between ML and MH (MH-ML).

### Cured Payne effect

A Rubber Process Analyzer, TA Elite (TA Instruments, New Castle, USA) was used to measure the cured Payne effect. Samples were first cured at 160°C in the device according to their optimum curing time (t90). Directly after this, the cured Payne effect was measured at 100°C. Stain sweeps from 0.56% to 100% were applied to the cured samples using a frequency of 1.667 Hz. The cured Payne effect (G'_{0.56%-100%}) was obtained.

### Hardness, Shore A

A Zwick hardness tester (Zwick, Ulm, Germany) was used to evaluate the hardness on the Shore A scale according to ISO 48-4. Vulcanized samples were measured five times and the average hardness values were calculated.

### Stress-strain behaviour

Using a universal mechanical tester Zwick Z01 (Zwick, Ulm, Germany) according to ISO 37 (die type 2), the stress-strain behaviour of the rubber compounds was measured. A crosshead speed of 500 mm/min was used. The tensile test was performed at room temperature. Five samples of each compound were measured and the average values of these five measurements were used.

### Dynamic properties

Dynamic mechanical analysis was performed on samples of the vulcanised compounds using the Gabo-Netzsch Eplexor tester (Netzsch, Germany). Rectangular-shaped samples with a thickness of 2 mm and a width of 5.5 mm were measured in tension mode. A static strain of 0.3% and a dynamic strain of 0.1% were used. The test was carried out with a dynamic load frequency of 10 Hz over a temperature range from -80 to 80°C. The rolling resistance indicator (tan δ at 60°C), the wet grip indicator (tan δ at 0°C), and the glass transition temperature Tg (temperature at which tan δ reaches a maximum) were obtained.

### Glass transition temperature, Tg

The position of the peak maximum in the curve from the determination of the dynamic properties was taken as the glass transition temperature, Tg.

### Preparation of rubber compositions:

### Materials:

| | |
|---|---|
| Rubber: | S-SBR - Sprintan 4601¹ (Synthos, Germany) |
| | BR - Buna CB24² (Arlanxeo, Germany) |
| Hydrocarbon resins: | |
| | Cycloaliphatic hydrocarbon resin - Escorez 5300³ (Exxon Mobil Corporation, Germany) |
| | Polyterpene resin - Dercolyte M115⁴ |
| Oils: | Treated Distillate Aromatic Extract (TDAE) (Hansen & Rosenthal, Germany) |
| | Hexamoll^{™} DINCH BMB⁶ (BASF, Germany) |
| | Palatinol 10P BMB⁷ (BASF, Germany) |
| | Plastomoll DOA BMB⁸ (BASF, Germany) |
| Silica: | ULTRASIL 7000 GR (Evonik Industries, Germany). |

Silane coupling agent: Bis(triethoxysilylpropyl) disulphide - Si 75⁹ (Evonik Industries, Germany)
Zinc oxide (ZnO) (Millipore Sigma, Germany)
Stearic acid (Millipore Sigma, Germany).
Sulfur
N-tert-butyl-benzothiazole sulfonamide (TBBS) (Caldic B.V., The Netherlands) N,N'-Diphenylguanidine (DPG) (Caldic B.V., The Netherlands).

¹Solution-polymerised functionalised styrene butadiene copolymer with a styrene content of 21%, vinyl content of 63% and Tg of -25°C
² Solution polymerised, high cis 1,4 polybutadiene polymer
³ Cycloaliphatic hydrocarbon resin having a softening point of 105°C, Tg of 55°C and Mw of 670 g/mol
⁴ Bio-based polyterpene resin produced from copolymerisation of alpha and beta pinene having a softening point of 115°C, Tg of 70°C and Mw of 1300 g/mol
⁶ 1,2-Cyclohexane dicarboxylic acid, di-isononyl ester
⁷ Phthalic acid ester of isomeric C₁₀ alcohols
⁸ Dioctyl adipate
⁹ Referred to herein as "TESPD"

Different oil and resin blends (50/50 blend ratio) were mixed in a simplified silica-filled SBR/BR tire tread compound as set out in Table 1. The amounts in Table 1 are parts by weight based on 100 parts by weight of the rubber composition (phr).

**Table 1: Tire tread compound**

| **Material** | **phr** |
|---|---|
| S-SBR | 80 |
| BR | 20 |
| Silica | 80 |
| TESPD | 6.2 |
| Plasticizer(s) | 37.5 or 80 |
| Zinc oxide | 2.5 |
| Stearic acid | 2.5 |
| Sulfur | 1.4 |
| TBBS | 2 |
| DPG | 1.5 |

Corresponding reference compounds (denoted herein by "REF") were produced using Treated Distillate Aromatic Extract (TDAE) as the plasticiser. Compounds with a conventional plasticizer concentration of 37.5 phr and with a high plasticizer content of 80 phr were produced. The high plasticiser compounds are denoted herein by "(H)". These provide better insight into the influence of the oil and resin blends on the rubber compounds compared to the reference compounds with TDAE. Rubber compositions were also made using varying oil and resin blend ratios (20/80, 50/50 and 80/20) based on the same silica-filled SBR/BR tire tread compound as set out in Table 1. Further details are provided in the following examples.

### Example 1 - Rubber compositions containing 50/50 blends of diester oils with a cycloaliphatic hydrocarbon resin (37.5 phr and 80 phr plasticizer)

Rubber compositions based on 50/50 diester oil and hydrocarbon resin blends were prepared by compounding the components listed in Table 2. Compositions containing 80 phr plasticizer are denoted "(H)".

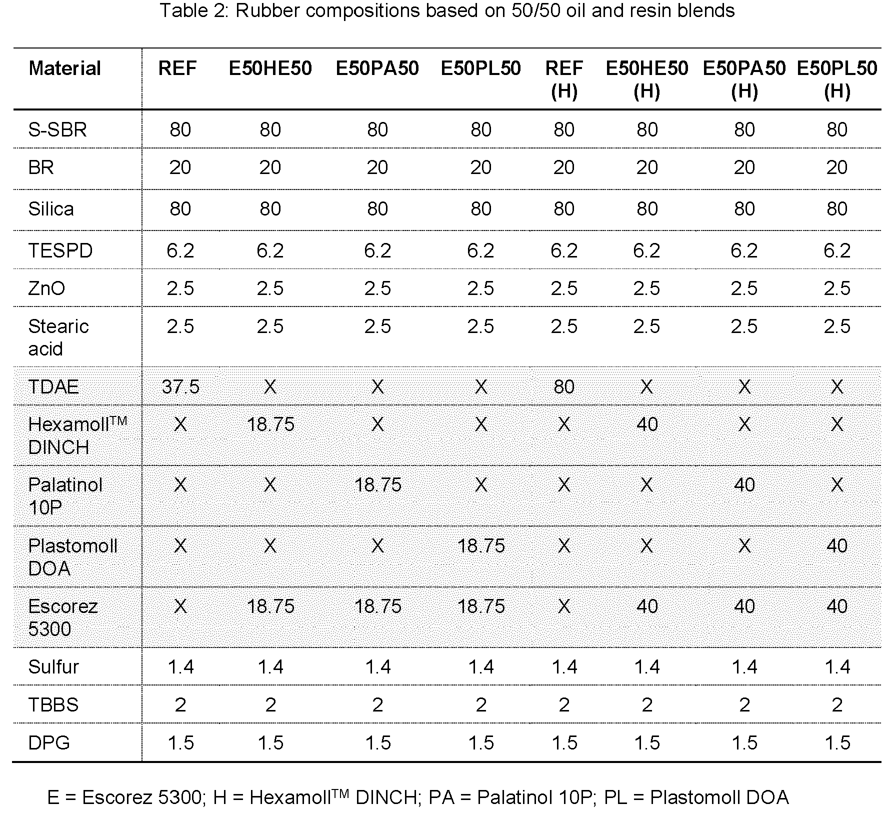

Compounding of the components listed in Table 2 was carried out according to the general procedure set out in Table 3:

**Table 3: General mixing procedure of the rubber compositions**

| **Time** | **Action** |
|---|---|
| **[min:s]** | 1^{st} **Stage pre-heating 80°C - 70 rpm** |
| 000 | Add polymers |
| 100 | Add 2/3 (silica + silane) |
| 230 | Add oil, ZnO, stearic acid, 1/3 (silica + silane) |
| 400 | Sweep for 15 seconds |
| 4.15 | Isothermal mixing at 140°C |
| 7.00 | End. Dump and sheet out on mill |

| | **2^{nd} Stage pre-heating 80°C - 80 rpm** |
|---|---|
| 000 | Add batch stage 1 |
| 0.50 | Add DPG |
| 100 | Isothermal mixing at 140°C |
| 5.00 | End. Dump sheet out on mill |

| | **3^{rd} Stage pre-heating 50°C - 50 rpm** |
|---|---|
| 000 | Add batch stage 2 + vulcanisation system |
| 300 | End. Dump and sheet out on mill |

The rubber compositions were subjected to the test methods described herein. The results are provided in Table 4 and in accompanying Figures 1 and 2.

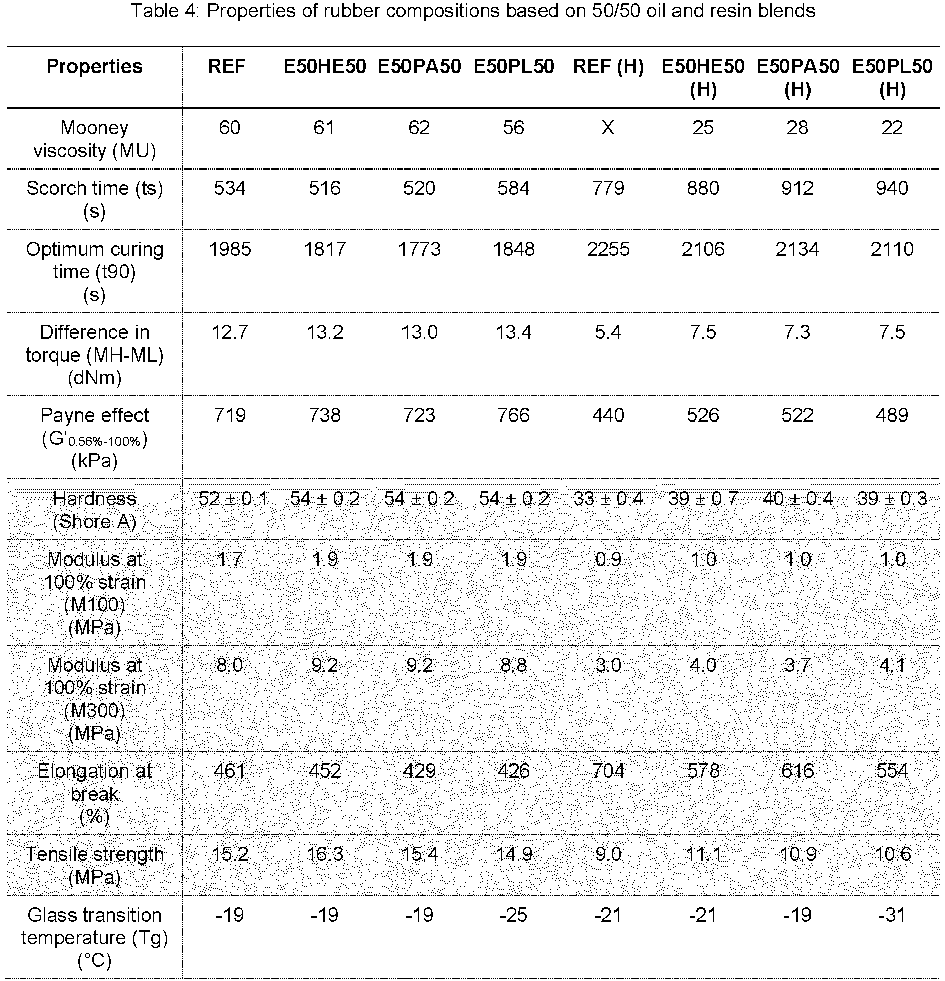

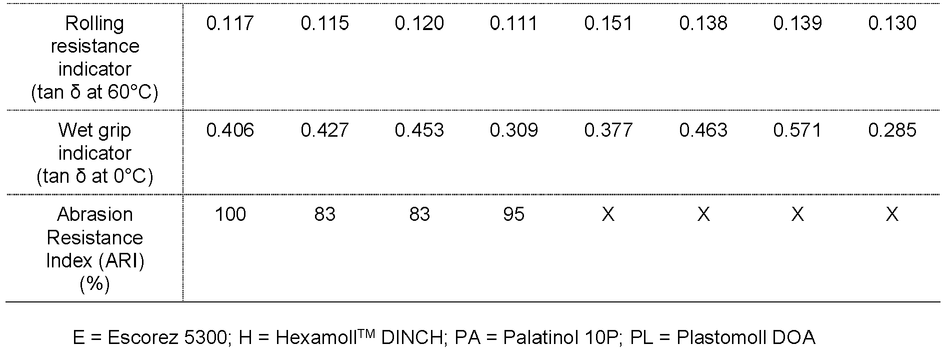

It was observed that the 50/50 blends showed overall improved results compared to TDAE oil. The wet grip indicator was improved for the compounds with the same Tg of-19°C. Shorter optimum cure times were obtained for the plasticizer blends compared to TDAE oil, which saves time and energy during the curing process. The plasticizer blends also showed higher differences in torque in the rheometer curves, indicating higher crosslink densities and thus improved reinforcing behavior. This was also visible in the higher moduli at 100% and 300% strain, and in the higher tensile strength values.

### Example 2 - Rubber compositions containing blends of the diester oil Hexamoll^{™} DINCH with a cycloaliphatic hydrocarbon resin in different blend ratios

Rubber compositions based on 20/80, 50/50 and 80/20 oil and resin blends were prepared by compounding the components listed in Table 5.

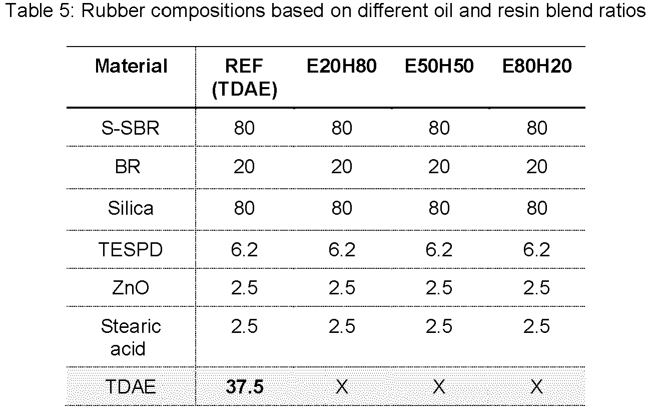

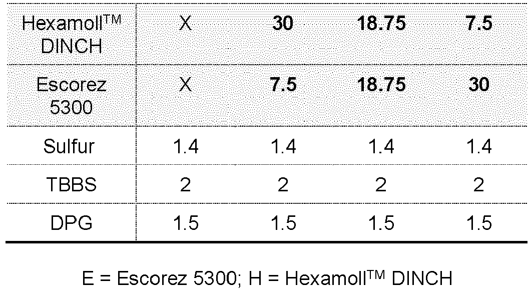

The rubber compositions were subjected to the test methods described herein. The results are provided in Table 6 and in accompanying Figure 3.

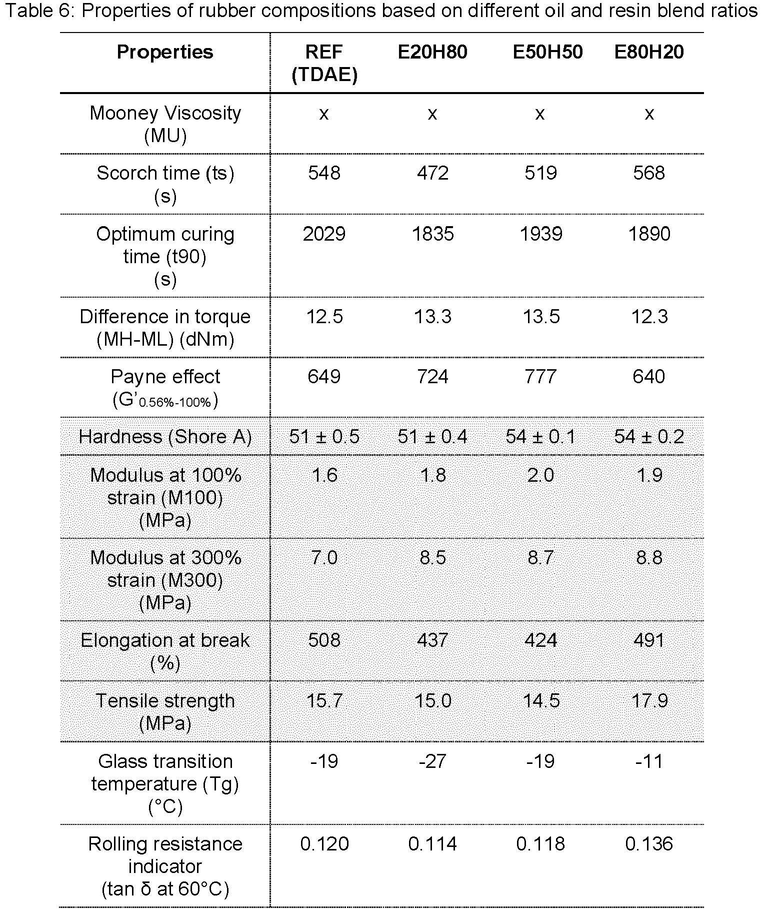

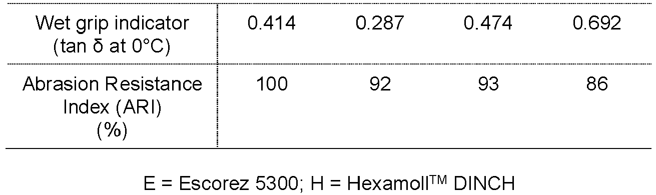

The rubber compositions with different ratios of oil and resin showed that a 50/50 ratio results in the most similar properties as the reference composition with TDAE. However, the results provide an insight into how the Tg of the final composition can be adjusted by varying the oil and resin blend ratio. Compared to TDAE, the blends showed improved results in terms of cure behavior and stress-strain behavior. Improved reinforcing behavior was shown in improved M100 and M300 as well as improved tensile strength. Higher tan δ peaks were also obtained which indicates improved compatibility of the oil and resin blend with the rubber polymers and leads to improved wet grip values. An increase in resin (and thus decrease in oil) results in: an increase in Tg; a decrease in rolling resistance indicator; an increase in wet grip indicator; and a decrease in scorch time.

### Example 3 - Rubber compositions containing blends of the diester oil Hexamoll^{™} DINCH with a polyterpene resin in different blend ratios

Rubber compositions based on 20/80, 50/50 and 80/20 oil and resin blends were prepared by compounding the components listed in Table 7.

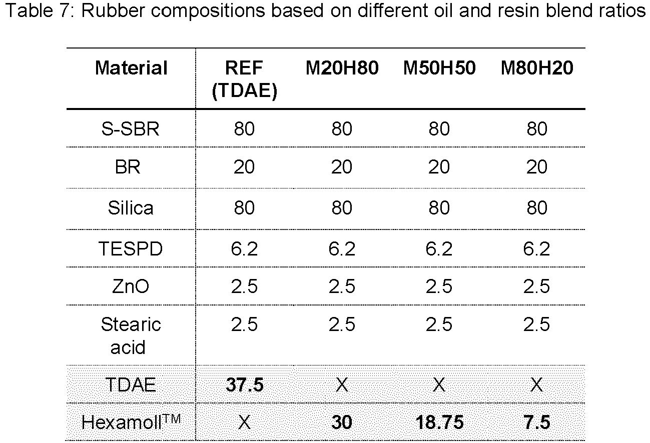

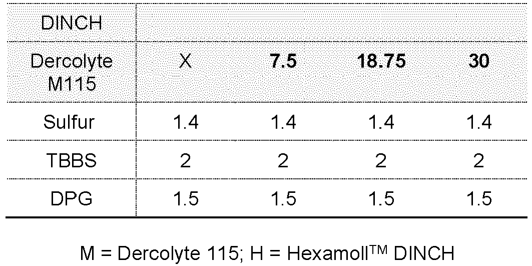

The rubber compositions were subjected to the test methods described herein. The results are provided in Table 8 and in accompanying Figure 4.

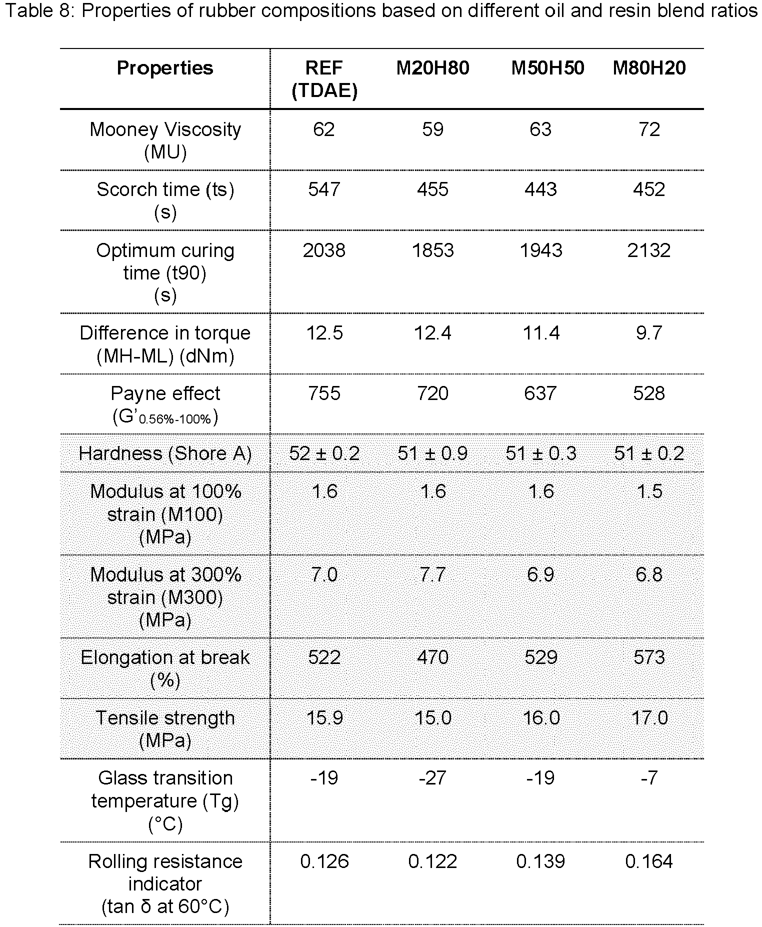

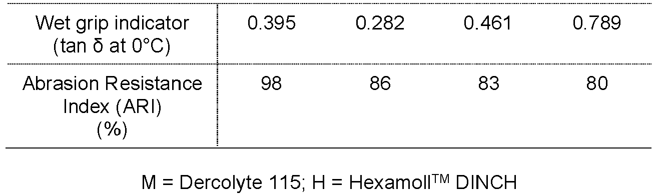

An increase in resin (and thus decrease in oil) results in: a higher viscosity; a decrease in cured Payne effect; and a lower torque difference.

## Claims

1. A rubber composition comprising:
(a) a rubber component comprising one or more diene elastomers;
(b) a reinforcing filler; and
(c) a plasticizing component comprising:
(i) a first plasticizer which is a hydrocarbon resin, or combination of hydrocarbon resins; and
(ii) a second plasticizer which is a di- or tri-ester oil containing a compound of general formula (I): 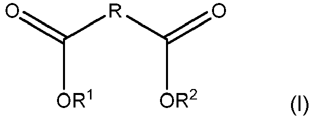
(wherein R is a straight-chained C₂₋₁₀ alkylene group, a branched C₃₋₁₀ alkylene group, or a group having the structure: 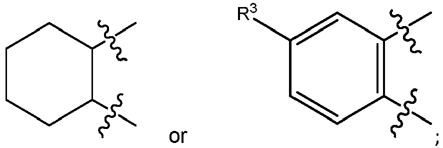
R¹ and R² are independently selected from the group consisting of a straight-chained C₁₋₃₀ alkyl group, a branched C₃₋₃₀ alkyl group, a cyclic C₃₋₃₀ alkyl group, a C₆₋₃₀ aralkyl group, and a C₆₋₃₀ alkaryl group; and
R³ is either a hydrogen atom or a group -C(O)OR⁴ in which R⁴ is a straight-chained C₁₋₃₀ alkyl group or a branched C₃₋₃₀ alkyl group).

2. A rubber composition as claimed in claim 1, wherein the second plasticizer is a di- or tri-ester oil containing a compound of general formula (I) in which R¹ and R², which may be the same or different, are a straight-chained C₁₋₃₀ alkyl group or a branched C₃₋₃₀ alkyl group, preferably a straight-chained C₁₋₂₀ alkyl group or a branched C₃₋₂₀ alkyl group, more preferably a straight-chained C₆₋₁₂ alkyl group or a branched C₆₋₁₂ alkyl group, for example a straight-chained C₈₋₁₀ alkyl group or a branched C₈₋₁₀ alkyl group.

3. A rubber composition as claimed in claim 1, wherein the second plasticiser is a diester oil containing one of the following compounds:

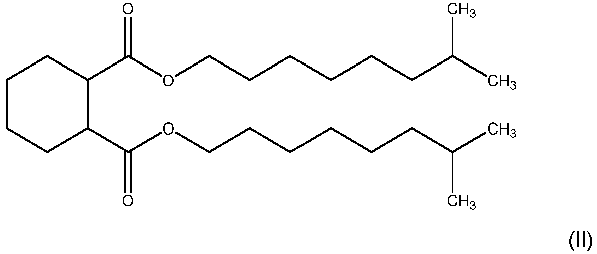

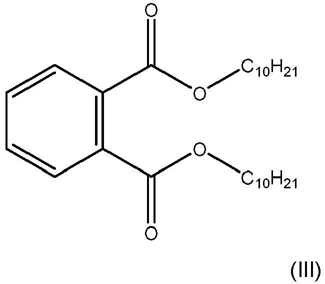

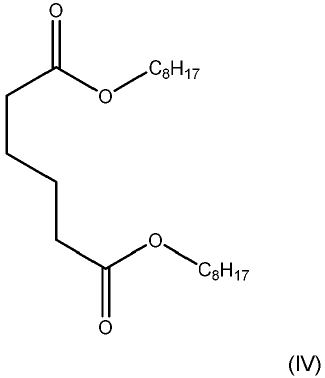

4. A rubber composition as claimed in any one of the preceding claims, wherein the second plasticizer is present in an amount in the range from about 5 phr to about 60 phr, preferably in the range from about 10 phr to about 50 phr, more preferably in the range from about 15 phr to about about 45 phr, for example in the range from about 18 phr to about 40 phr.

5. A rubber composition as claimed in claim 4, wherein the second plasticizer is present in an amount greater than 15 phr, preferably in the range from greater than 15 phr to about 60 phr, more preferably in the range from greater than 15 phr to about 50 phr, for example in the range from greater than about 15 phr to about 45 phr.

6. A rubber composition as claimed in any one of the preceding claims, wherein said hydrocarbon resin is selected from the group consisting of:
cyclopentadiene homopolymer or copolymer resins; dicyclopentadiene homopolymer or copolymer resins; terpene homopolymer or copolymer resins; rosinic resins; C₅ homopolymer or copolymer resins which may be partially or fully hydrogenated; C₉ homopolymer or copolymer resins which may be partially or fully hydrogenated; alpha-methyl-styrene homopolymer or copolymer resins; and mixtures thereof.

7. A rubber composition as claimed in claim 6, wherein the hydrocarbon resin is a cycloaliphatic hydrocarbon resin or a polyterpene resin.

8. A rubber composition as claimed in any one of the preceding claims, wherein the first plasticizer is present in an amount in the range from about 5 to about 60 phr, preferably from about 10 to about 50 phr, more preferably from about 15 phr to about 45 phr, for example from about 18 phr to about 40 phr.

9. A rubber composition as claimed in any one of the preceding claims, wherein the ratio of the first plasticizer to the second plasticizer is the range from 10:90 to 90:10, preferably from 20:80 to 80:20, for example about 50:50.

10. A rubber composition as claimed in any one of the preceding claims, wherein the rubber component comprises one or more elastomers selected from styrene-butadiene rubber (SBR), butadiene rubber (BR) and natural rubber.

11. A rubber composition as claimed in claim 10, wherein the rubber component comprises about 70 to about 90 phr, preferably about 80 phr, styrene-butadiene rubber (SBR) and about 10 to about 30 phr, preferably about 20 phr, butadiene rubber (BR); preferably wherein the styrene-butadiene rubber (SBR) is a solution-polymerised styrene butadiene rubber (S-SBR).

12. A rubber composition as claimed in any one of the preceding claims, wherein the reinforcing filler comprises a silica filler; preferably wherein said silica filler is present in an amount in the range from about 50 to about 110 phr, preferably from about 70 to about 90 phr, for example about 80 phr, with respect to 100 phr of the rubber composition.

13. A rubber composition as claimed in any one of the preceding claims, wherein the rubber composition is vulcanizable.

14. A vulcanized rubber compound obtained by, directly obtained by, or obtainable by cross-linking the rubber composition as claimed in claim 13.

15. A tire component made from a rubber composition as claimed in any one of claims 1 to 14, preferably a tire tread.

16. A vehicle tire comprising the tire component as claimed in claim 15.
